# EUROPEAN PATENT APPLICATION

(11) **EP 0 593 819 A1**
(43) Date of publication of application: **27.04.1994**
(21) Application number: 92203237.0
(22) Date of filing: 22.10.1992
(51) Int. Cl.: A01G 9/10

(54) **Mechanism for transplanting**

(71) Applicant: Van Dijk, Frank W., NL-2661 EP Bergschenhoek (NL)
(72) Inventor: van Dijk, Frank W., NL-2661 EP Bergschenhoek (NL); van Wingerden, Teunis, Huntersville, North Carolina (US)

(57) **Abstract**

The transplanting-mechanism is composed of two subsystems. The first is a tube and needle system which makes it possible to arrest a clod during penetration as well as screwing out by the second subsystem, a helical wirebody. Last mentioned screws itself in and out of a clod in such a way that the hole is made of a length and cross-section not more than that of the penetrated wirebody. This will avoid damage to the plant material.
With the tube and needle system it is also possible to give water to the plant after transplanting. A drilling unit can be incorporated in the mechanism to drill holes of the size of the clod of the plant to be transplanted, in the transplanting-tray.

## Description

The invention concerns the arresting of clods of subtratum with the aid of a movable needle in a tube, which after the transplanting action of the whole mechanism, moves downwards, after which the needle is pushed out of the tube at an angle, along which angle the needle is forced into the clod with the aim to arrest this during turning out of the clod of a helical body.

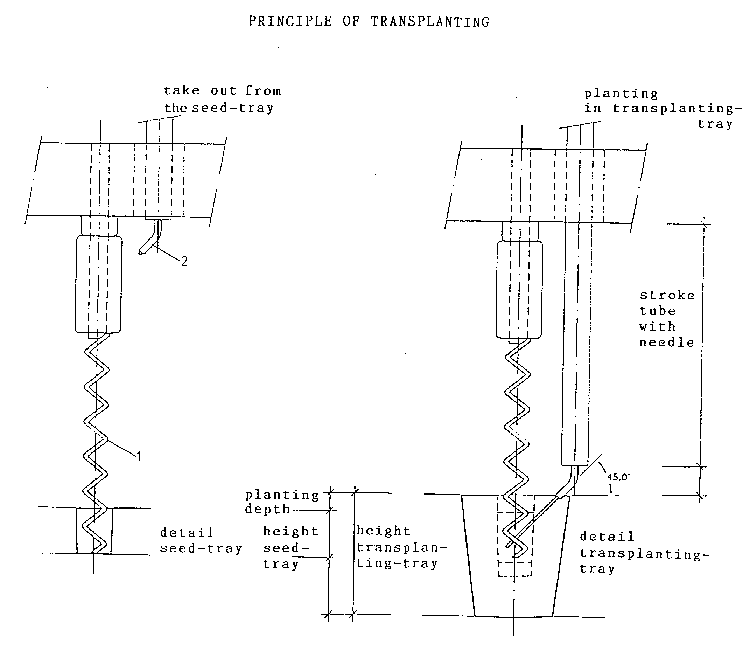

Known systems do not divide the gripping mechanism in a gripping- and arrestingsystem, which can be individually mechanically moved. Therefore these gripping mechanisms can cause damage to the leaves and roots of the plant grown in the clod.
The invention described here solves this problem by using a helical wirebody that pushes aside the leaves and roots that are in its way while penetrating the clod and by using an arresting system with tube and needle during withdrawal of the helical wirebody after the transplanting action
In the enclosed figure an outline is given of this transplanting mechanism.

The helical wirebody screws into the clod which is in the original seed-tray and makes at the same time a vertical stroke. This vertical movement is combined with the turning movement in such a way that there will arise a hole in the clod that is not thicker than the wire material of the helical body and with the length equal to the penetrated length of the helical wirebody, and with a cross-section equal to the cross-section of the helical wirebody.
The clod can be taken out of its hole in the seed-tray by pulling up the helical wirebody. The helical wirebody can be moved sidewards to above the transplanting-tray. The clod with an eventual plant is then shoved into the hole of the transplanting-tray. The tube with needle is moved downward far enough to enable penetration of the needle in the clod when pushed out. The needle will, along a certain stroke, be pushed out of the tube at an angle of for instance 45^{o}. Various other angles are also possible. The needle forces into the clod and the helical wirebody can screw out of the clod without rotating it along.
If desired, water can be injected into the clod through the needle, which is made hollow in that case, or through the tube.
After the helical wirebody has been unscrewed, the needle is drawn out of the clod and tube with needle make an upward stroke, after which the whole mechanism will move back to the seed-tray.
The above procedure will be reiterated with consecutive other clods, either through the mechanism having taken another position above the seed-tray, or through the seed-tray being moved so as to place the next clod under the mechanism.
In case the clod tends to rotate along with the penetration of the helical wirebody, for instance in case of round clods or clods of a compact composition, it is also possible to let the needle penetrate the clod as described above, before the helical body is screwed into it. In such cases the arresting function is also used for picking up the clods. To reach the maximum transplanting capacity, the seed-tray and transplanting-tray have to be chosen in such a way that the pattern of the plants in the seed-tray is divisible by the pattern of the plants in the transplanting-tray. E.g. the seed-tray should have twice as many rows and columns as the transplanting-tray. The distances between the holes of the transplanting-tray will then be twice the distances on the seed-tray. Now it is possible to incorporate as many helical wirebodies with tube and needle systems into one mechanism as there are holes in the transplanting-tray. Now it is possible to fill a whole transplanting-tray in one stroke of the mechanism and empty the seed-tray in four strokes. Completely other patterns are also possible, as long as a combination of a number of helical wirebodies with tube and needle sytems can empty a seed-tray and fill the transplanting-tray in one or more strokes of the mechanism. For instance a mechanism with one row of helical bodies with tube and needle systems can be applied, so that row by row can be planted out.
A quite different possibility is offered when single helical wirebodies with tube and needle systems are used. After taking clods out of the seed-tray, they can be transported individually through a sorting-station, assorted, taken to as many buffers as there are assortments, and taken to the same number of transplanting-trays less one. At this last station plants that have not germinated or are too small, are thrown out.

One can also add to the mechanism an item that drills as many holes in the transplanting-tray,as the number of plants that are transplanted at the same time, and of the same size as the clods that have to be transplanted.

## Claims

1. Tube and needle system, which after transplanting a clod with plant into a transplanting-tray, makes a stroke towards the clod so far as is necessary to be able to push a needle out of the tube at a certain angle to the vertical axis of the clod, far enough penetrating the clod to arrest it in order to avoid its rotating along with the unscrewing of a helical body.

2. As claim 1, but before the penetration of the helical wirebody into a clod in a seed-tray, in order to arrest the clod while the helical body is penetrating.

3. As claim 1, but with the possibility, before or during or after the unscrewing of the helical wirebody, to inject water into the clod through the needle, which has to be hollow in that case, or through the tube.

4. Helical wirebody, of which the vertical movement is added to the turning movement, that the clod to be penetrated will have a hole of the length of the way the wirematerial has gone through the clod and with a cross-section equal to that of the wire-material.

5. Transplantingmechanism as a combination of the tube and needle system according to claim 1 and/or claim 2 and/or claim 3 with the helical wirebody according to claim 4.

6. Composition of transplantingmechanisms according to claim 5 to one manipulator, in which each helical wirebody with tube and needle system belonging to this composition makes the same movements at the same time.

7. Transplantingmechanism according to claim 5, where the helical wirebody and the tube and needle system are separately operated.

8. Composition of transplantingmechanisms according to claim 6, where the composed helical wirebodies move together the same way and the same time, however separately operating from the, at the same time and in the same way operating, tube and needle systems.

9. Composition of transplantingmechanisms according to claim 6 or claim 8, however in such a composition that a whole row of a transplanting-tray can be transplanted in one cycle.

10. Composition of transplantingmechanisms according to claim 9, however more than one row of the transplanting-tray is filled in one cycle.

11. Composition of transplantingmechanisms according to claim 10, however so many clods are transplanted at the same time, that a whole transplanting-tray is filled in one cycle.

12. Composition of transplantingmechanisms according to claims 9, 10 and 11, however in such a way that the pattern of clods in the transplanting tray has a fixed ratio to the pattern in the seed-tray.

13. Composition of transplantingmechanisms according to claims 9, 10, 11 and 12, however where the composed manipulator is combined with a drilling unit, which drills as many holes in the substratum of the transplanting-tray as the number of transplanting-mechanisms composed in the manipulator according to claim 5, with the size of the clods to be transplanted.

14. Composition of transplantingmechanisms according to claim 13, however with the transplantingmechanisms according to conclusion 7.

15. Transplantingmechanisms according to claim 5 or claim 7, which however are transportable individually, transported along a sorting-station, buffered and reclustered at one or more transplanting-trays.
